# EUROPÄISCHE PATENTSCHRIFT

(11) **EP 1 286 068 B1**
(45) Veröffentlichungstag und Bekanntmachung des Hinweises auf die Patenterteilung: **21.09.2005**
(21) Anmeldenummer: 02015273.2
(22) Anmeldetag: 09.07.2002
(51) Int. Cl.: F16C 9/04

(54) **Maschinenteil mit einem Radial-Gleitlager, insbesondere Pleuel für Hubkolbenmaschinen**
Machine part with a radial slide bearing, especially connecting rod for reciprocating piston machine
Partie de machine avec palier lisse radial,notamment bielle pour machine à pistons alternatifs

(30) Priorität: 10.08.2001 DE 10139508
(43) Veröffentlichungstag der Anmeldung: 26.02.2003
(73) Patentinhaber: Bayerische Motoren Werke Aktiengesellschaft, 80809 München (DE)
(72) Erfinder: Haimerl, Michael, 80638 München (DE); Kunz, Kurt, 80686 München (DE)

(56) Entgegenhaltungen:
- DE-A- 4 342 436
- DE-A- 19 751 640
- US-A- 2 776 175
- US-A- 3 705 753
- US-A- 6 012 850
- PATENT ABSTRACTS OF JAPAN vol. 1995, no. 08, 29. September 1995 (1995-09-29) & JP 07 119731 A (TOYOTA MOTOR CORP), 9. Mai 1995 (1995-05-09)

## Beschreibung

Die Erfindung bezieht sich nach dem Oberbegriff des Patenanspruches 1 auf ein Maschinenteil mit einem Radial-Gleitlager, insbesondere Pleuel für Hubkolbenmaschinen, bei dem eine Lagerbohrung in einem zweiteiligen und mittels einer Verschraubung zusammensetzbaren Gleitlager der Anordnung von eine Lagerschale bildenden Halbschalen dient, die jeweils auf einer Stützschale aus Stahl mit einer Laufschicht versehen sind, und ferner die Halbschalen über die Stahl-Stützschalen mit jeweiligem umfangsgerichteten Überstand mittels der Gleitlager-Verschraubung in der Lagerbohrung verspannt angeordnet sind.

Es ist bekannt, derartige Lagerschalen mittels Reibschluss in der Lagerbohrung zu fixieren. Bei einer Lager-Gestaltung mit reduziertem Materialaufwand und/oder impulsartiger, ungleicher Umlauflasten einer Welle auf die Lagerschale ist eine drehende Mitnahme der Lagerschale in der Lagerbohrung zumindest über geringe Umfangsbereiche, insbesondere Mikrobereiche bewirkt.

Ein derartiger Sachverhalt ist beispielsweise in der US 3,705,753 für ein Radial-Gleitlager eines als Pleuel gestalteten Maschinenteils beschrieben, wobei der Anmeldegegenstand darauf gerichtet ist, die formschlüssig zusammenwirkenden Flächen von Lagerbohrung und Lagerschale jeweils mit einem Kanalnetz nach Art eines feinmaschigen Gitters zu versehen zur Schmierung der aufeinanderreibenden Flächen von Lagerschale und Lagerbohrung. Ziel hierbei ist es, die miteinander zusammenwirkenden Oberflächen von Lagerbohrung und Lagerschale durch Ölzufuhr vor Beschädigung zu schützen.

Es ist weiter bekannt, dass die geringen Relativbewegungen im Mikrometerbereich zwischen trocken verbauter Lagerschale und Lagerbohrung zur Ausbildung des nachteiligen Passungsrostes führen. Zur Beseitigung dieses Nachteiles wird gemäß der DE 198 57 757 C1 vorgeschlagen, die Lagerschale an ihrem Außenumfang mit Perfluoralkoxy-Polymere zu beschichten.

Schließlich ist es aus der DE-OS 2 411 907 bekannt, eine selbstschmierende Lagerschale an ihrem Außenumfang mit spitz zulaufenden Radial-Fortsätzen zu versehen zur drehfesten Anordnung in der Lagerbohrung.

Der Erfindung liegt die Aufgabe zugrunde, ein gattungsgemäßes Radial-Gleitlager in einem Maschinenteil derart weiterzubilden, dass fertigungstechnisch in einfacher Weise einwandfreie Voraussetzungen für eine betriebssichere Fixierung einer Lagerschale in einer Lagerbohrung erzielt sind.

Diese Aufgabe ist mit dem Patentanspruch 1 dadurch gelöst, dass die Lagerbohrung lagerschalenseitig zumindest eine Randschicht mit einer mindestens 1,5-fach größeren Brinellhärte gegenüber den Stahl-Stützschalen aufweist, und dass in dieser Randschicht an der Oberfläche der Lagerbohrung ein Kreuzriefenmuster mit Materialaufstellungen entsprechend einer Oberflächenrauhigkeit von R_{z} = 3 - 7 µm ausgebildet ist derart, dass über die in die bohrungsseitig auflagenfreien bzw. blanken Stahl-Stützschalen bei der Gleitlager-Verschraubung eindringenden Materialaufstellungen ein die Lagerschale in der Lagerbohrung fixierender Formschluss erzielt ist.

Mit der Erfindung ist in vorteilhaft einfacher Weise eine Verzahnung zwischen der Lagerbohrung und der Lagerschale erzielt, wobei die der Verzahnung dienenden Materialaufstellungen in weiterer vorteilhafter Weise als Ergebnis eines Bearbeitungsverfahrens erzielt werden.

Eine wirksame Fixierung ist in Ausgestaltung der Erfindung vorteilhafterweise dadurch erreicht, dass das Kreuzriefenmuster in Kreuzungspunkten der Riefen in beiden Umfangsrichtungen der Lagerbohrung gerichtete spitze Winkel einschließt, wobei gleichgerichtete Riefen mit einer der Stirnseiten der Lagerbohrung in eine Umfangsrichtung gesehen einen Winkel von 5 - 30 ° einschließen.

Ein derartigen Kreuzriefenmuster ist in weiterer Ausgestaltung der Erfindung mittels Präzisionshonen ausgebildet.

Gemäß einem bevorzugten Vorschlag ist das Kreuzriefenmuster mittels einer Dornhonung gebildet, wobei das im Hon-Vorlauf erzeugte Riefenmuster gleichgerichteter Riefen eine größeren Oberflächenrauhigkeit aufweist als das im Hon-Rücklauf erzeugte Riefenmuster. Mit dieser Vorgehensweise bleiben die im Hon-Vorlauf erzeugten Materialaufstellungen in ausreichendem Maß für den Verzahnungs-Formschluss erhalten.

Gemäß einer bevorzugten Ausgestaltung des Maschinenteils ist dieses als ein Pleuel für eine Brennkraftmaschine gestaltet, wobei das Pleuel in der Lagerbohrung eine Brinellhärte HB = 280 -310 und jede Stahl-Stützschale eine Brinellhärte HB = 120 - 200 aufweist.

Ein für das Pleuel mit der vorgenannten Brinellhärte geeigneter Werkstoff ist in der DE 197 51 640 A1 geoffenbart für einen aus der Schmiedewärme mittels Luftabkühlung behandelten Stahl C70S6By mit einem Mangangehalt Mn = 0,55 - 1,0 %.

Der vorgenannte Werkstoff bietet nach einem weiteren Vorschlag den Vorteil, dass ein Lagerdeckel von einem Pleuelkopf des Pleuels bruchgetrennt ausgebildet ist und dass die Lagerbohrung in den Trennbereichen von Lagerdeckel und Pleuelkopf in Umfangsrichtung weisende Nuten aufweist, in die zur Axialsicherung der Lagerschale an den Halbschalen vorgesehene Nasen eingreifen. Da bei einem bruchgetrennten Gleitlager die Trennebenen unterschiedlich ausfallen, können die an den Halbschalen vorgesehenen Nasen lediglich zur Axialsicherung dienen, nicht jedoch zur Sicherung in Umfangsrichtung, so dass auch für diese Lagerschalen belastungsabhängige Drehbewegungen in der Lagerbohrung ohne die Erfindung möglich wären.

Die Erfindung ist anhand eines in der Zeichnung dargestellten Ausführungsbeispiels beschrieben. Es zeigt in
- Figur 1: ein Pleuel mit einer in Explosionsdarstellung gezeigten Lagerschale,
- Figur 2: ein vergrößertes Kreuzriefenmuster in der Lagerbohrung des Pleuels.

Ein Pleuel 1 für eine nicht dargestellte Hubkolben-Brennkraftmaschine umfasst ein Radial-Gleitlager 2, bei dem eine Lagerbohrung 3 in einem zweiteiligen und mittels einer Verschraubung 4 zusammensetzbaren Gleitlager 2 der Anordnung von eine Lagerschale 5 bildenden Halbschalen 5', 5" dient. Diese Halbschalen 5', 5" weisen jeweils auf einer Stützschale 6 aus Stahl eine Laufschicht 7 auf. Weiter sind die Halbschalen 5', 5" über die Stahl-Stützschalen 6 mit jeweiligem umfangsgerichteten Überstand 8 mittels der Gleitlager-Verschraubung 4 in der Lagerbohrung 3 verspannt angeordnet.

Um bei diesem Radial-Gleitlager 2 fertigungstechnisch in einfacher Weise einwandfreie Voraussetzungen für eine betriebssichere Fixierung der Lagerschale 5 in der Lagerbohrung 3 gegen Drehbewegungen zu erzielen, wird erfindungsgemäß vorgeschlagen, dass die Lagerbohrung 3 lagerschalenseitig zumindest eine Randschicht mit einer mindestens 1,5-fach größeren Brinellhärte gegenüber den Stahl-Stützschalen 6 aufweist, und dass in dieser Randschicht an der Oberfläche 3' der Lagerbohrung 3 ein Kreuzriefenmuster 9 mit Materialaufstellungen entsprechend einer Oberflächenrauhigkeit von R_{z} = 3 - 7 µm ausgebildet ist derart, dass über die in die bohrungsseitig auflagenfreien bzw. blanken Stahl-Stützschalen 6 mittels der Gleitlager-Verschraubung 4 eindringenden Materialaufstellungen ein die Lagerschale 5 in der Lagerbohrung 3 fixierender Formschluss erzielt ist. Mit diesem Formschluss ist in vorteilhafter Weise eine Verzahnung zwischen der Lagerbohrung 3 und der Lagerschale 5 erzielt zur sicheren Vermeidung von Drehbewegungen der Lagerschale 5 in der Lagerbohrung 3.

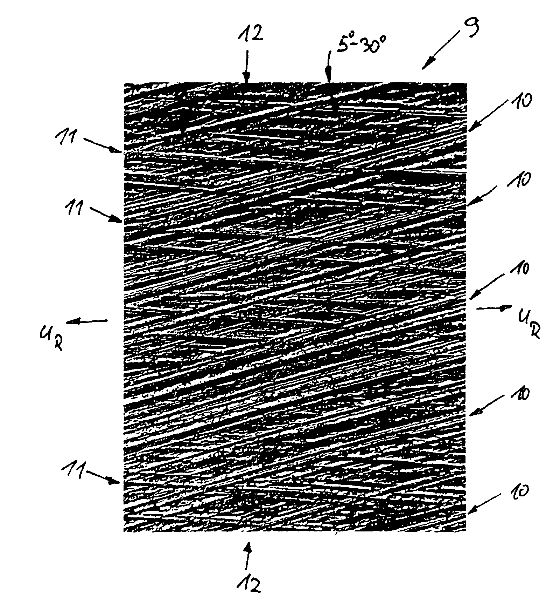

Wie aus Figur 2 ersichtlich, schließt das Kreuzriefenmuster 9 in Kreuzungspunkten der Riefen 10 und 11 in beide Umfangsrichtungen U_{R} der Lagerbohrung 3 gerichtete spitze Winkel ein, wobei gleichgerichtete Riefen 10 bzw. 11 mit einer der Stirnseiten 12 der Lagerbohrung 3 in eine Umfangsrichtung gesehen einen Winkel von 5° - 30° einschließen.

Dieses Kreuzriefenmuster 9 ist mittels Präzisionshonen ausgebildet.

Vorzugsweise ist das Kreuzriefenmuster 9 mittels einer Dornhonung gebildet, wobei das im Hon-Vorlauf erzeugte Riefenmuster gleichgerichteter Riefen 10 eine größere Oberflächenrauhigkeit aufweist als das im Hon-Rücklauf erzeugte Riefenmuster gleichgerichteter Riefen 11.

Das Pleuel 1 ist aus einem aus der Schmiedewärme mittels Luftabkühlung behandelten Stahl gemäß der DE 197 51 640 A1 gestaltet, wobei dieser Werkstoff in der Lagerbohrung eine Brinellhärte HB = 280 - 310 aufweist. Demgegenüber ist für die Stahl-Stützschalen 6 ein Stahl verwendet mit einer Brinellhärte HB = 120 - 200, womit ein Eindringen der Materialaufstellungen der Lagerbohrung 3 in die Stahl-Stützschalen 6 der Halbschalen 5', 5" sichergestellt ist.

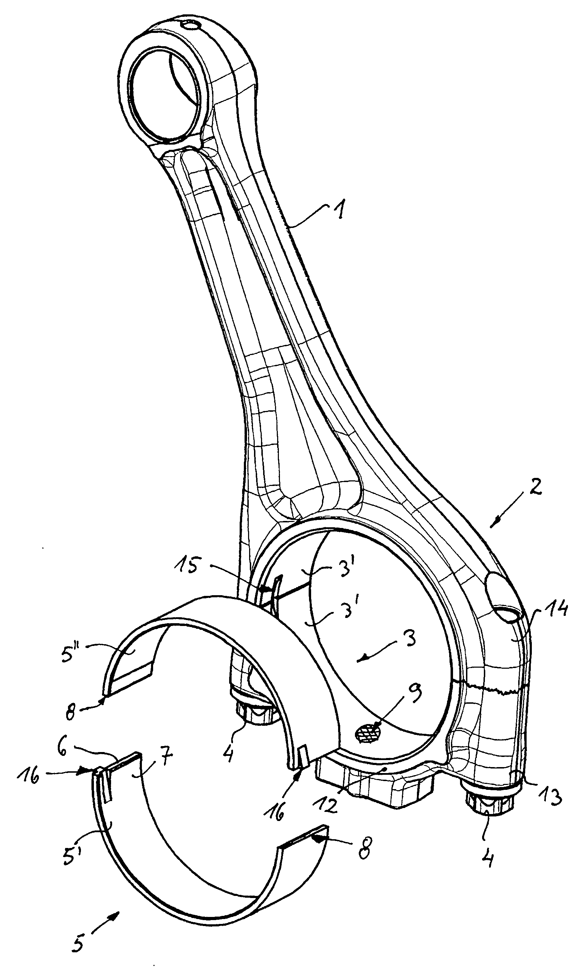

Der vorgenannte Werkstoff ist vorteilhaft geeignet, dass ein Lagerdeckel 13 von einem Pleuelkopf 14 des Pleuels 1 bruchgetrennt ist. Weiter zeigt die Figur 1, dass die Lagerbohrung in den Trennbereichen von Lagerdeckel 13 und Pleuelkopf 14 in Umfangsrichtung weisende Nuten 15 aufweist, in die zur Axialsicherung der Lagerschale 5 an den Halbschalen 5', 5" vorgesehene Nasen 16 eingreifen. Einen Anschlag der Nasen 16 in Umfangsrichtung der Lagerbohrung 3 bewirken diese Nasen 16 nicht.

Damit fehlt ein die erfindungsgemäße Verzahnung unterstützender Anschlag gegen Bewegung im Gegensatz zu dem in der DE 195 35 497 A1 geoffenbarten Radial-Gleitlager mit einem Lagerstuhl und einem Lagerdeckel mit aneinander anliegenden Teilungsflächen, wobei Lagerstuhl und Lagerdeckel mittels Schrauben miteinander verspannt sind, wobei zumindest eine Teilungsfläche eine durch eine lineare Bearbeitung erhöhte Oberflächenrauhigkeit aufweist und wobei zwischen Lagerstuhl und Lagerdeckel ein Zentriermittel vorgesehen ist.

Im übrigen kann die erfindungsgemäße Randschicht der Lagerbohrung 3 des Gleitlagers 2 mit entsprechender Brinellhärte auch mit einem anderen Stahl mit entsprechender Wärmebehandlung erzielt sein.

Schließlich kann die erfindungsgemäße Randschicht auch in einer Lagerbohrung einer Lagerbuchse aus hochwertigem Stahl ausgebildet sein und diese Lagerbuchse in einem Maschinenteil, wie einem Pleuel oder einem Maschinengehäuse von geringerer Festigkeit fest angeordnet sein.

Mit der Erfindung ist in vorteilhafter Weise ein form- und kraftschlüssiger Verbund zwischen der Lagerschale und der Lagerbohrung des Pleuels erzielt, für das sich der weitere Vorteil eines massenoptimierten Leichtbaupleuels ergibt.

## Patentansprüche

1. Maschinenteil mit einem Radial-Gleitlager, insbesondere Pleuel für Hubkolbenmaschinen,
- bei dem eine Lagerbohrung (3) in einem zweiteiligen und mittels einer Verschraubung (4) zusammensetzbaren Gleitlager (2) der Anordnung von eine Lagerschale (5) bildenden Halbschalen (5', 5") dient, die
- jeweils auf einer Stützschale (6) aus Stahl mit einer Laufschicht (7) versehen sind, und ferner
- die Halbschalen (5', 5") über die Stahl-Stützschalen (6) mit jeweiligem umfangsgerichteten Überstand (8) mittels der Gleitlager-Verschraubung (4) in der Lagerbohrung (3) verspannt angeordnet sind,
**dadurch gekennzeichnet,**
- **dass** die Lagerbohrung (3) lagerschalenseitig zumindest eine Randschicht mit einer mindestens 1,5-fach größeren Brinellhärte gegenüber den Stahl-Stützschalen (6) aufweist, und
- **dass** in dieser Randschicht an der Oberfläche (3') der Lagerbohrung (3) ein Kreuzriefenmuster (9) mit Materialaufstellungen entsprechend einer Oberflächenrauhigkeit von R_{z} = 3 - 7 µm ausgebildet ist derart, dass
- über die in die bohrungsseitig auflagenfreien bzw. blanken Stahl-Stützschalen (6) mittels der Gleitlager-Verschraubung eindringenden Materialaufstellungen ein die Lagerschale (5) in der Lagerbohrung (3) fixierender Formschluss erzielt ist.

2. Maschinenteil nach Anspruch 1, **dadurch gekennzeichnet,**
- **dass** das Kreuzriefenmuster (9) in Kreuzungspunkten der Riefen (10, 11) in beide Umfangsrichtungen (U_{R}) der Lagerbohrung (3) gerichtete spitze Winkel einschließt, wobei
- gleichgerichtete Riefen (10 bzw. 11) mit einer der Stirnseiten (12) der Lagerbohrung (3) in eine Umfangsrichtung gesehen einen Winkel von 5° - 30° einschließen.

3. Maschinenteil nach Anspruch 1 und 2, **dadurch gekennzeichnet, dass** das Kreuzriefenmuster (9) mittels Präzisions-Honen ausgebildet ist.

4. Maschinenteil nach Anspruch 3, **dadurch gekennzeichnet,**
- **dass** das Kreuzriefenmuster (9) mittels einer Dorn-Honung gebildet ist, wobei
- das im Hon-Vorlauf erzeugte Riefenmuster gleichgerichteter Riefen (10) eine größere Oberflächenrauhigkeit aufweist als das im Hon-Rücklauf erzeugte Riefenmuster gleichgerichteter Riefen (11).

5. Maschinenteil nach einem oder mehreren der Ansprüche 1 bis 4,
- **gekennzeichnet durch** die Ausbildung als Pleuel (1) einer Brennkraftmaschine, wobei
- das Pleuel (1) aus einem C70S6By in der Lagerbohrung (3) eine Brinellhärte HB = 280 - 310 und
- jede Stahl-Stützschale (6) eine Brinellhärte HB = 120 - 200 aufweist.

6. Pleuel nach Anspruch 5, **dadurch gekennzeichnet,**
- **dass** ein Lagerdeckel (13) von einem Pleuelkopf (14) bruchgetrennt ausgebildet ist und dass
- die Lagerbohrung (3) in den Trennbereichen von Lagerdeckel (13) und Pleuelkopf (14) in Umfangsrichtung weisende Nuten (15) aufweist, in die
- zur Axialsicherung der Lagerschale (5) an den Halbschalen (5', 5") vorgesehene Nasen (16) eingreifen.

## Claims

1. An engine part comprising a radial sliding bearing, especially a connecting rod for reciprocating internal combustion engines,
- wherein a bearing bore (3) in a two-part sliding bearing (2) assembled by screwing (4) is used for positioning of half-shells (5', 5") forming a bearing shell (5) and
- each disposed on a steel backing shell (6) with a sliding layer (7), and
- the half-shells (5', 5") are clamped in the bore (3) by the sliding-bearing screws (4) so as to project (8) over the periphery of the steel backing shells (6),
**characterised in that**
- on the side towards the bearing shell, the bore (3) has at least one edge layer with a Brinell hardness at least 1.5 times greater than that of the steel backing shells (6), and
- a cross-pattern (9) of grooves with material configurations corresponding to a surface roughness of R_{z} = 3 - 7 µm is formed in the said boundary layer on the surface (3') of the bore (3) such that
- a positive connection fixing the bearing shell (5) in the bore (3) is obtained via the material configurations, which are pressed by the sliding-bearing screws over the steel backing shells (6), which are bare or free of deposits on the side facing the bore.

2. An engine part according to claim 1, **characterised in that**
- the cross-pattern of grooves (9) includes acute angles extending in both peripheral directions (U_{R}) of the bore (3) at the points of intersection between the grooves (10, 11), wherein
- unidirectional grooves (10 or 11) include an angle of 5 - 30°, considered in a peripheral direction, with one face (12) of the bore (3).

3. An engine part according to claims 1 and 2, **characterised in that** the cross-pattern of grooves (9) is obtained by precision honing.

4. A engine part according to claim 3, **characterised in that**
- the cross-pattern of grooves (9) is formed by mandrel honing, wherein
- the pattern of unidirectional grooves (10) produced by the forward run of the hone has greater surface roughness than the pattern of unidirectional grooves (11) produced by the return run of the hone.

5. An engine part according to one or more of claims 1 to 4,
- **characterised by** an embodiment in the form of a connecting rod (1) of an internal combustion engine, wherein
- the connecting rod (1), formed of a C70S6By steel, has a Brinell hardness HB = 280 - 310 at the bearing bore (3) and
- each steel backing shell (6) has a Brinell hardness HB = 120 - 200.

6. A connecting rod according to claim 5, **characterised in that**
- a bearing cover (13) is fracture-separated from a connecting-rod head (14) and
- in the parting regions between the bearing cover (13) and the connecting-rod head (14) the bore (3) has peripherally extending grooves (15) into which
- lugs (16) engage for axially securing the bearing shell (5) at the half-shells (5', 5").

## Revendications

1. Pièce de moteur avec palier lisse radial, notamment bielle pour machines à pistons alternatifs, dans lequel
- un alésage de palier (3), pratiqué dans un palier lisse (2) en deux parties pouvant être assemblées au moyen d'un vissage (4), sert à mettre en place des semi-coquilles (5', 5") formant un coussinet (5), chacune d'entre elles étant pourvue d'une coquille de support (6) en acier comportant une couche de roulement (7), et en outre,
- les semi-coquilles (5', 5") sont disposées, par l'intermédiaire des coquilles de support en acier (6) comportant chacune un porte-à-faux orienté suivant la direction périphérique, au moyen du vissage (4) du palier lisse, de manière fixement serrée dans l'alésage de palier (3),
**caractérisée en ce que**
- l'alésage de palier (3) comporte, du côté du coussinet, au moins une couche marginale présentant une dureté Brinell au moins 1,5 fois plus grande que celle des coquilles de support en acier (6), et
- dans cette couche marginale, à la surface (3') de l'alésage de palier (3), est formé un dessin de cannelures croisées (9) avec des reliefs de matériau correspondant à une rugosité superficielle R_{z} = 3 à 7 µm, de sorte que
- les reliefs de matériau pénétrant, au moyen du vissage du palier lisse, dans les coquilles de support en acier - sans revêtement ou nues du côté de l'alésage - réalisent une fermeture géométrique fixant le coussinet (5) dans l'alésage de palier (3).

2. Pièce de moteur selon la revendication 1,
**caractérisée en ce que**
- le dessin de cannelures croisées (9) inclut, en des points de croisement des cannelures (10, 11), des angles aigus orientés suivant les deux directions périphériques (U_{R}) de l'alésage de palier (3), et
- les rainures de même orientation (10 ou 11) - vues suivant une direction périphérique - font avec l'une des faces frontales (12) de l'alésage de palier 3, un angle de 5° à 30°.

3. Pièce de moteur selon les revendications 1 et 2,
**caractérisée en ce que**
le dessin de cannelures croisées (9) est formé au moyen de rodages de précision.

4. Pièce de moteur selon la revendication 3,
**caractérisée en ce que**
- le dessin de cannelures croisées (9) est formé au moyen d'un rodage à l'aide d'un mandrin, et
- le dessin de cannelures de même orientation (10) produit au cours de l'avance de rodage présente une plus grande rugosité superficielle que le dessin de cannelures de même orientation (11) produit au cours du retour de rodage.

5. Pièce de moteur selon une ou plusieurs des revendications 1 à 4,
**caractérisée par**
- sa formation en tant que bielle (1) d'un moteur à combustion interne,
- la bielle (1) faite d'un acier C70S6By présente, dans l'alésage de palier (3), une dureté Brinell HB = 280 à 310, et
- chaque coquille de support en acier (6) présente une dureté Brinell HB = 120 à 200.

6. Bielle selon la revendication 5,
**caractérisée en ce qu'**
- un chapeau de palier (13) est formé de manière séparée par rupture vis-à-vis d'une tête de bielle (14), et
- l'alésage de palier (3) présente, dans les zones de séparation du chapeau de palier (13) et de la tête de bielle (14), des rainures (15) orientées suivant la direction périphérique,
- dans lesquelles s'engrènent, en vue de la fixation axiale du coussinet (5), des tenons (16) prévus sur les semi-coquilles (5', 5").
